# EUROPÄISCHE PATENTSCHRIFT

(11) **EP 0 753 367 B1**
(45) Veröffentlichungstag und Bekanntmachung des Hinweises auf die Patenterteilung: **08.12.1999**
(21) Anmeldenummer: 96116560.2
(22) Anmeldetag: 12.07.1994
(51) Int. Cl.: B23B 29/034

(54) **Werkzeugkopf für den Einsatz in Werkzeugmaschinen**
Tool head for machine-tools
Tête d'outil utilisable dans des machines-outils

(30) Priorität: 13.09.1993 DE 4330822
(43) Veröffentlichungstag der Anmeldung: 15.01.1997
(62) Teilanmeldung aus: 94923723.4
(73) Patentinhaber: KOMET Präzisionswerkzeuge Robert Breuning GmbH, D-74354 Besigheim (DE)
(72) Erfinder: Schneider, Eberhardt, 74354 Besigheim (DE); Scheer, Gerhard, 74369 Löchgau (DE)
(74) Vertreter: Wolf, Eckhard, Dr.-Ing.

(56) Entgegenhaltungen:
- DE-A- 2 010 200

## Beschreibung

Die Erfindung betrifft einen Werkzeugkopf für den Einsatz in Werkzeugmaschinen mit einem Grundkörper, einem axial über den Grundkörper überstehenden, mit einer rotierenden Maschinenspindel kuppelbaren Werkzeugschaft, mit mindestens einem quer zur Grundkörperachse verstellbaren, eine stirnseitig überstehende Werkzeugaufnahme aufweisenden Schieber, mit einer Meßeinrichtung zur direkten Messung des Verstellwegs des Schiebers relativ zum Grundkörper, mit einer im Grundkörper angeordneten, mit der Meßeinrichtung verbundenen Meßelektronik, mit einem im Grundkörper angeordneten, in Verstellrichtung auf den Schieber einwirkenden, vorzugsweise elektrischen Verstellmotor und mit einer Stromversorgungseinrichtung für die Meßelektronik und gegebenenfalls den Verstellmotor. Ein Werkzeugkopf dieser Art ist aus WO 91/03345 bekannt.

Um den Schieber und das von dessen Werkzeugaufnahme getragene Schneidwerkzeug genau einstellen zu können, ist es notwendig, den Verstellweg des Schiebers exakt zu messen. Hierzu ist es bekannt (WO91/03345), den Verstellweg des Schiebers relativ zum Grundkörper auf direktem Wege beispielsweise mit einem optischen oder kapazitiven Wegmeßsystem zu messen und die Meßergebnisse über einen drahtlosen, vorzugsweise optoelektronischen Datenaustausch extern auszuwerten. Bei diesem Wegmeßsystem wird als nachteilig empfunden, daß eine absolute Wegmessung ohne Datenverlust bei Stromabschaltung nicht möglich ist und daß der Einbau hohe Anforderungen an die einzuhaltenden Toleranzen erfordert.

Ausgehend hiervon liegt der Erfindung die Aufgabe zugrunde, einen Werkzeugkopf der eingangs angegebenen Art zu entwickeln, der eine kompakte Bauweise und einen störungsfreien Betrieb gewährleistet.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung sieht vor, daß die Meßeinrichtung eine in einem grundkörperfesten, in eine taschenartige Ausnehmung des Schiebers eingreifenden Spulengehäuse angeordnete Tauchspule und einen die taschenartige Ausnehmung und die Tauchspule in Verschieberichtung des Schiebers und quer zur Motorgehäuseachse durchgreifenden schieberfesten stabförmigen Magnetanker aufweist. Das nach dem Tauchspulenprinzip arbeitende Meßsystem hat gegenüber dem bekannten kapazitiven Meßsystem den Vorteil, daß eine absolute Wegmessung ohne Datenverlust bei Stromabschaltung möglich ist und daß der Einbau geringere Anforderungen an die einzuhaltenden Toleranzen erfordert.

Um eine Justierung des Wegmeßsystems zu ermöglichen, ist der Magnetanker mit seinem einen Ende zweckmäßig an einem in eine in Verschieberichtung des Schiebers ausgerichtete Gewindebohrung eingedrehten Justierhalter stirnseitig überstehend befestigt, während er an seinem dem Justierhalter gegenüberliegenden Ende einen in eine Linearführung innerhalb des Schiebers eingreifenden Führungszapfen trägt. Um den Magnetanker nach erfolgter Justage in seiner Nullstellung am Schieber arretieren zu können, ist der Justierhalter durch eine in einer vorgegebenen Verschiebelage des Schiebers von außen her zugängliche Stellschraube am Schieber festlegbar.

Das vorzugsweise aus einem antimagnetischen Material bestehende Spulengehäuse weist seitlich überstehende Montagelappen zur Befestigung am Grundkörper auf. Es weist zweckmäßig einen runden geschlossenen Spulenraum zur Aufnahme der Tauchspule auf, und ist auf der dem Motor zugewandten Seite, vorzugsweise im Bereich zwischen den beiden Montagelappen, mit einer das Motorgehäuse an seinem Umfang teilweise umfassenden Ausnehmung versehen. Die daraus resultierende gegenseitige Verzahnung zwischen Spulengehäuse und Motorgehäuse ermöglicht eine kompakte Bauweise des Werkzeugkopfes.

Um das Innere des Werkzeugkopfes flüssigkeitsdicht abzudichten und trotzdem ein reibungsarmes Verschieben des Schiebers gegenüber dem Grundkörper zu gewährleisten, wird gemäß einer vorteilhaften Ausgestaltung der Erfindung vorgeschlagen, daß der Schieber mit seiner Werkzeugaufnahme durch ein stirnseitiges Langloch des Grundkörpers hindurchgreift und außerhalb des Langlochs eine radial gegen den Schieber abgedichtete, mit dem Schieber mitbewegte Ringscheibe trägt, die federnd gegen einen in einer stirnseitigen Ringnut des Grundkörpers angeordneten, vorzugsweise als Quadring ausgebildeten elastomeren Dichtungsring so anpreßbar ist, daß zwischen Ringscheibe und Grundkörper ein über den Umfang der Ringscheibe im wesentlichen konstanter Spalt mit einer Weite von 5 bis 20 µm verbleibt. Die Wandstärke der Ringscheibe ist zweckmäßig durch Materialabtrag an ihrer dem Grundkörper zugewandten Fläche unter Einstellung der vorgegebenen Spaltweite abstimmbar, während das Anpressen der Ringscheibe gegen den Dichtungsring durch einen in einer schieberseitigen Umfangsnut angeordneten Federring erfolgen kann.

Um die Gleitfläche des Schiebers im Grundkörper durchgehend schleifen und dennoch eine stabile Deckelmontage gewährleisten zu können, wird nach einer weiteren vorteilhaften Ausgestaltung der Erfindung vorgeschlagen, daß der Grundkörper eine radial durchgehende, endbegrenzungsfreie Gleitfläche für den Schieber aufweist, und daß auf der Seite des Gleitsteins ein Abstandshalter zwischen Grundkörper und einem Deckelteil angeordnet ist. Der Abstandshalter sorgt außerdem dafür, daß die Rückkräfte aus der Schrägverzahnung des Verstellmechanismus für den Schieber aufgenommen und in den Grundkörper eingeleitet werden können.

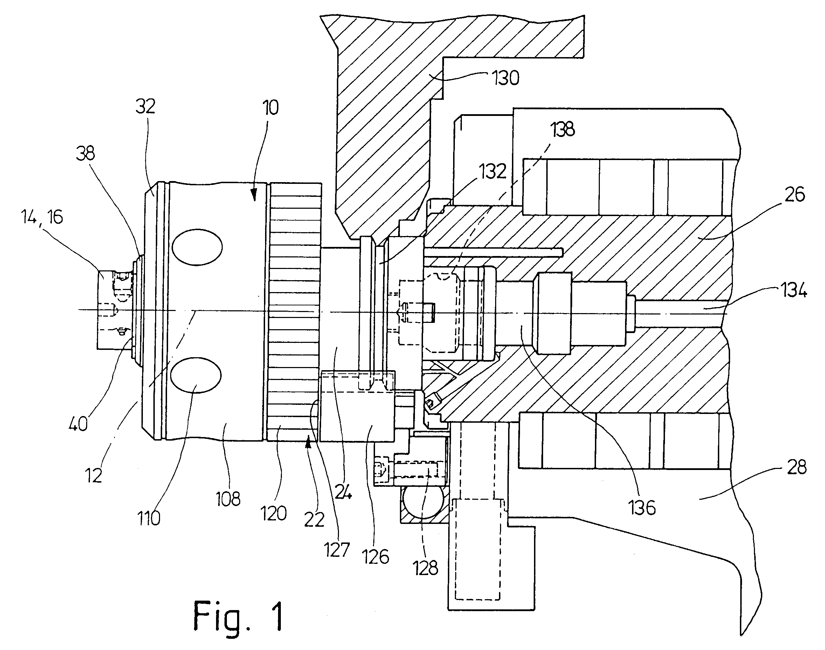

Im folgenden wird die Erfindung anhand eines in der Zeichnung in schematischer Weise dargestellten Ausführungsbeispiels näher erläutert. Es zeigen
- Fig. 1: eine Seitenansicht eines in eine Maschinenspindel eingespannten Feindrehkopfs mit Verstellmechanismus, Fernbedienung und externer Stromzufuhr;

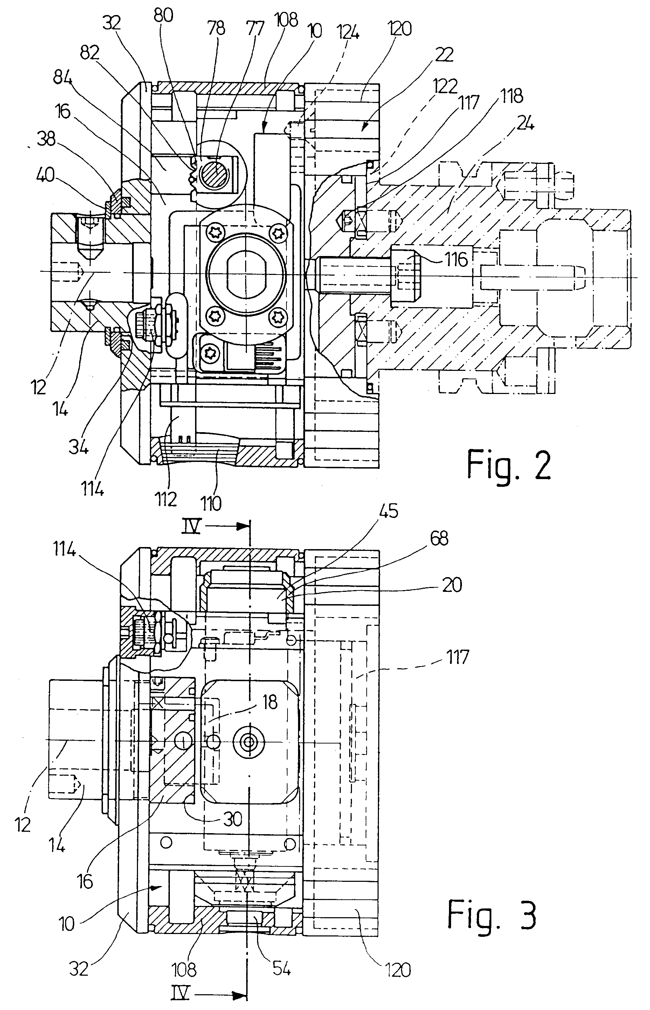

- Fig. 2: einen Längsschnitt durch den Feindrehkopf nach Fig. 1 mit Werkzeugschaft;
- Fig. 3: einen gegenüber Fig. 2 um 90° gedrehten Längsschnitt durch den Feindrehkopf;

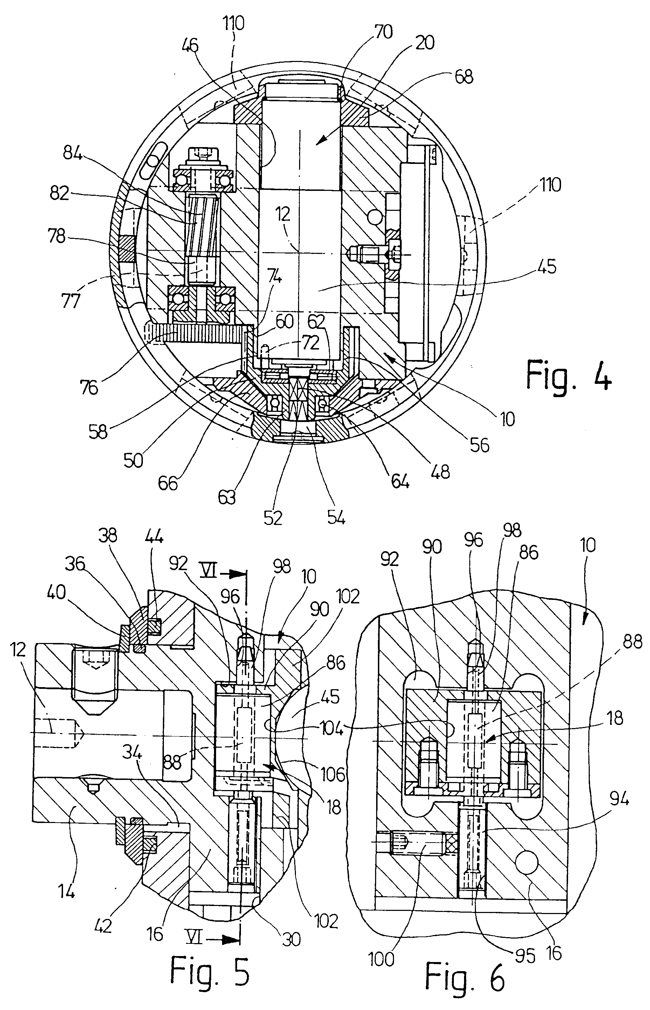

- Fig. 4: einen Schnitt entlang der Schnittlinie IV-IV der Fig. 3;
- Fig. 5: einen vergrößerten Ausschnitt aus Fig. 2 mit geschnittener Längenmeßeinrichtung;
- Fig. 6: einen Schnitt entlang der Schnittlinie VI-VI der Fig. 5.

Der in der Zeichnung dargestellte Feindrehkopf besteht im wesentlichen aus einem Grundkörper 10, einem quer zur Drehachse 12 des Feindrehkopfs gegenüber dem Grundkörper 10 verstellbaren, eine Werkzeugaufnahme 14 für ein Schneidwerkzeug tragenden Schieber 16, einer Meßeinrichtung 18 zur direkten Verstellwegmessung des Schiebers 16 relativ zum Grundkörper 10, einem in Verstellrichtung auf den Schieber einwirkenden elektrischen Verstellmotor 20, einer Stromversorgungseinrichtung 22 und einem axial über den Grundkörper 10 überstehenden Werkzeugschaft 24, der mit einer Maschinenspindel 26 einer Werkzeugmaschine 28 kuppelbar ist.

Der Schieber 16 ist im Grundkörper 10 in einer quer zur Grundkörperachse 12 ausgerichteten, durchgehenden, endbegrenzungsfreien Führungsnut 30 angeordnet, die nach außen hin über ein mit dem Grundkörper 10 endseitig über Abstandshalter starr verbundenes Deckelteil 32 begrenzt ist. Mit seiner Werkzeugaufnahme 14 greift der Schieber 16 durch ein Langloch 34 des Deckelteils 32 nach außen hindurch und trägt außerhalb des Langlochs 34 eine über den Dichtungsring 36 radial gegen die Werkzeugaufnahme 14 abgedichtete, mit dem Schieber mitbewegte Ringscheibe 38, die mit Hilfe des Federrings 40 federnd gegen einen in einer Ringnut 42 des Deckelteils angeordneten Quadring 44 so anpreßbar ist, daß zwischen der Ringscheibe 38 und dem Deckelteil 32 ein über den Umfang der Ringscheibe 38 im wesentlichen konstanter Spalt mit einer Weite von 10 µm verbleibt. Mit dieser Maßnahme wird vermieden, daß beim Verschieben des Schiebers die metallische Ringscheibe 38 auf dem metallischen Deckelteil 32 reibt.

Der Verstellmotor 20 weist ein im wesentlichen zylindrisches Motorgehäuse 45 auf, das in einer quer zur Verschieberichtung des Schiebers 16 und der Grundkörperachse 12 verlaufenden, die Grundkörperachse 12 schneidenden Querausnehmung des Grundkörpers 10 angeordnet ist. Die axial überstehende Abtriebswelle 48 ist als Sechskant ausgebildet. Sie trägt ein topfförmig ausgebildetes Abtriebszahnrad 50, dessen Innensechskant 52 länger als die Abtriebswelle 48 ist, so daß von außen her bei abgenommener Verschlußschraube 54 ein entsprechendes Sechskantwerkzeug zur Handverstellung des Abtriebszahnrades in den Innensechskant 52 einführbar ist. Das Abtriebszahnrad 50 übergreift mit seinem nach innen weisenden, außenverzahnten Mantelteil 56 das abtriebsseitige Ende des Motorgehäuses 45 und stützt sich dort außenseitig an einem das betreffende Gehäuseende aufnehmenden Hülsenansatz 58 über ein Gleitlager 60 radial ab. Weiter ist das Abtriebszahnrad 50 mit seiner Topfinnenseite über ein Wälzlager 62 axial an dem Hülsenansatz 58 gelagert, während es auf der Topfaußenseite mit seinem den Innensechskant 52 aufweisenden Hohlzapfen 63 in einem als Wälzlager 64 ausgebildeten Drehlager eines grundkörperfesten topfförmigen Deckelteils 66 gelagert ist. Auf seiner der Abtriebsseite gegenüberliegenden Seite ist der Verstellmotor 20 mit einem Spanndeckel 68 und einem elastomeren Ring 70 axial gegen den abtriebsseitigen Hülsenansatz 58 gespannt, wobei die Verdrehsicherung des Motorgehäuses 45 über die abtriebsseitig angeordneten exzentrischen Stifte 72 erfolgt. Durch die axial elastische Einspannung mit Verdrehelastizität ergibt sich ein weicher Anlauf des Motors, wodurch Anlaufstromspitzen reduziert werden können. Unter Berücksichtigung der am Motor angreifenden Zentrifugalkraft gilt dies insbesondere dann, wenn der Schwerpunkt des Verstellmotors zum elastischen Ring 70 hin gegenüber der Drehachse 12 des Grundkörpers 10 radial verschoben ist.

Über das Abtriebszahnrad 50 wird ein außermittig angeordneter Verstellmechanismus für den Schieber angetrieben, der ein mit dem Zahnkranz 74 des Abtriebszahnrads 50 kämmendes Antriebsritzel 76 und eine starr mit diesem verbundene Gewindespindel 77 aufweist. Auf der Gewindespindel ist ein Gleitstein 78 mit einer Schrägverzahnung 80 geführt, die mit einer komplementären Schrägverzahnung 82 eines am Schieber 16 angeordneten Gegenstücks 84 kämmt.

Die Meßeinrichtung 18 weist eine grundkörperfeste Tauchspule 86 und einen in Verschieberichtung in die Tauchspule 86 eingreifenden schieberfesten stabförmigen Magnetanker 88 auf. Die Tauchspule 86 ist im wesentlichen mittig im Grundkörper 10 in einem grundkörperfesten Spulengehäuse 90 angeordnet, das von der Motorseite aus zusammen mit der Tauchspule in eine taschenartige Ausnehmung 92 des Schiebers eingreift. Der Magnetanker 88 ist mit seinem einen Ende an einem in eine in Verschieberichtung des Schiebers 16 ausgerichtete Gewindebohrung 95 eingedrehten Justierhalter 94 stirnseitig überstehend befestigt, während er an seinem dem Justierhalter 94 gegenüberliegenden Ende einen in eine Linearführung (Bohrung) 96 innerhalb des Schiebers 16 eingreifenden Führungszapfen 98 trägt. Der Justierhalter 94 ist durch eine in einer vorgegebenen Verschiebelage des Schiebers von außen her zugängliche Stellschraube 100 am Schieber 16 festlegbar. Das Spulengehäuse ist mit seitlich überstehenden Montagelappen 102 versehen und weist auf seiner dem Spulenraum 104 gegenüberliegenden Seite eine im Bereich zwischen den beiden Montagelappen 102 angeordnete, das Motorgehäuse 45 an seinem Umfang teilweise umfassende Ausnehmung 106 auf.

Der Grundkörper 10 wird an seinem Umfang von einem Mantelring 108 aus Metall oder Kunststoff umfaßt, in welchem über den Umfang in gleichen Winkelabständen verteilt angeordnete Fenster 110 für Infrarot-Sende-Empfänger 112 angeordnet sind. Die Sende-Empfänger sorgen für den drahtlosen Datenaustausch zwischen dem Werkzeugkopf und einem externen, computergestützten Fernsteuergerät. Der Datenaustausch kann beispielsweise zu Justierzwecken auch galvanisch über die Schnittstelle 114 erfolgen.

Der Werkzeugschaft 24 für den Anschluß an die Maschinenspindel 26 ist mit einer einzigen Zentralschraube 116 in einer Schaftaufnahme 117 am Grundkörper 10 axial befestigt. Die exzentrisch angeordneten Paßstifte 118 sorgen dabei für die Verdrehsicherung und Drehmomentübertragung.

Auf der Seite des Werkzeugschaftes 24 ist zusätzlich ein ringförmiges Spulengehäuse 120 angeordnet, das zusammen mit dem Werkzeugschaft 24 über dessen radial überstehenden Bund 122 mit der Zentralschraube 116 am Grundkörper befestigt ist. Die Verdrehsicherung des Spulengehäuses 120 erfolgt über die als Senkschrauben ausgebildeten, mit ihrem Schaft in entsprechende Bohrungen des Grundkörpers eingreifenden Mitnehmerbolzen 124.

Im dem Spulengehäuse 120 befindet sich eine in einer mechanisch belastbaren Gußmasse aus Kunststoff oder Kunstharz eingebettete Sekundärspule mit zugehöriger Stabilisierungselektronik, die Bestandteil einer induktiven Übertragungsstrecke der Stromversorgungseinrichtung 22 ist und für die Stromversorgung des Verstellmotors 20 und der im Werkzeugkopf enthaltenen Elektronikschaltungen sorgt. Grundsätzlich ist es möglich, die Induktionsstrecke auch zur bidirektionalen Datenübertragung zu verwenden, indem die Datensignale dem Induktionsstrom gegebenenfalls in beiden Richtungen aufmoduliert werden.

Die Primärspule der induktiven Übertragungsstrecke ist in einem statorseitigen Spulengehäuse 126 angeordnet, das radial außerhalb des Werkzeugschaftes 24 in den freien Zwischenraum zwischen der Stirnfläche der Maschinenspindel 26 und der Stirnfläche des werkzeugkopfseitigen Spulengehäuses 120 eingreift. Zur Einstellung des Luftspalts zwischen der Primär- und der Sekundärspule ist das statorseitige Spulengehäuse 126 an einem statorfesten Halter 128 sowohl in seinem Abstand zum werkzeugkopfseitigen Spulengehäuse 120 als auch in seiner Drehlage um eine zur Drehachse 12 parallele Achse verstellbar angeordnet. Der Halter 128 mit dem Spulengehäuse 126 kann auch nachträglich an eine vorhandene Werkzeugmaschine montiert werden. Das statorseitige Spulengehäuse 126 erstreckt sich nur über einen Teilumfang des Werkzeugschaftes und läßt den überwiegenden Teil des Schaftumfangs für den Zugriff eines Werkzeuggreifers 130 für den automatischen Werkzeugwechsel frei. Beim Werkzeugwechsel wird der Werkzeugkopf an der Greiferrille 132 vom Werkzeuggreifer 130 von der dem statorseitigen Spulengehäuse 126 gegenüberliegenden Seite her erfaßt und bei gelöster Werkzeugkupplung axial gegenüber der Maschinenspindel 26 verschoben. Die Kupplung des Werkzeugkopfes mit der Maschinenspindel 26 erfolgt dabei über einen maschinenseitig über die Zugstange 134 betätigbaren Spannmechanismus 136, der von der Maschinenseite aus in den Hohlraum 138 des Werkzeugschafts 24 eingreift und den Werkzeugkopf unter Herstellung einer Planflächenverspannung und einer Radialverspannung mit der Maschinenspindel 26 kuppelt.

## Patentansprüche

1. Werkzeugkopf für den Einsatz in Werkzeugmaschinen mit einem Grundkörper (10), einem axial über den Grundkörper (10) überstehenden, mit einer rotierenden Maschinenspindel (26) kuppelbaren Werkzeugschaft (24), mit mindestens einem quer zur Grundkörperachse (12) verstellbaren, eine stirnseitig überstehende Werkzeugaufnahme (14) aufweisenden Schieber (16), mit einer Meßeinrichtung (18) zur direkten Messung des Verstellwegs des Schiebers (16) relativ zum Grundkörper (10), mit einer im Grundkörper (10) angeordneten, mit der Meßeinrichtung (18) verbundenen Meßelektronik, mit einem im Grundkörper angeordneten, in Verstellrichtung auf den Schieber (16) einwirkenden, vorzugsweise elektrischen Verstellmotor (20) und mit einer Stromversorgungseinrichtung (22) für die Meßelektronik und gegebenenfalls den Verstellmotor (20), **dadurch gekennzeichnet**, daß die Meßeinrichtung (18) eine grundkörperfeste Tauchspule (86) und einen die Tauchspule in Verschieberichtung des Schiebers (16) durchgreifenden schieberfesten stabförmigen Magnetanker (88) aufweist.

2. Werkzeugkopf nach Anspruch 1, **dadurch gekennzeichnet**, daß die Tauchspule (86) in einem grundkörperfesten, in eine taschenartige Ausnehmung (92) des Schiebers (16) eingreifenden Spulengehäuse angeordnet ist und daß der schieberfeste stabförmige Magnetanker (88) die taschenartige Ausnehmung (92) und die Tauchspule (86) in Verschieberichtung des Schiebers (16) durchgreift.

3. Werkzeugkopf nach Anspruch 2, **dadurch gekennzeichnet**, daß das Spulengehäuse (90) seitlich überstehende Montagelappen (102) zur Befestigung am Grundkörper (10) aufweist.

4. Werkzeugkopf nach Anspruch 2 oder 3, **dadurch gekennzeichnet**, daß das Spulengehäuse (90) einen geschlossenen Spulenraum (104) aufweist.

5. Werkzeugkopf nach einem der Ansprüche 2 bis 4, **dadurch gekennzeichnet**, daß das Spulengehäuse (90) eine vorzugsweise im Bereich zwischen den beiden Montagelappen (102) angeordnete, in Richtung Verstellmotor (20) offene, das Motorgehäuse (45) an seinem Umfang teilweise umfassende Ausnehmung (106) aufweist.

6. Werkzeugkopf nach einem der Ansprüche 1 bis 5, **dadurch gekennzeichnet**, daß der Magnetanker (88) mit seinem einen Ende an einem in eine in Verschieberichtung des Schiebers ausgerichtete Gewindebohrung eingedrehten Justierhalter (94) stirnseitig überstehend befestigt ist.

7. Werkzeugkopf nach Anspruch 6, **dadurch gekennzeichnet**, daß der Magnetanker (88) an seinem dem Justierhalter (94) gegenüberliegenden Ende einen in eine Linearführung (96) innerhalb des Schiebers (16) eingreifenden Führungszapfen (98) trägt.

8. Werkzeugkopf nach Anspruch 6 oder 7, **dadurch gekennzeichnet**, daß der Justierhalter (94) durch eine in einer vorgegebenen Verschiebelage des Schiebers (16) von außen her zugängliche Feststellschraube (100) am Schieber (16) festlegbar ist.

9. Werkzeugkopf nach einem der Ansprüche 1 bis 8, **dadurch gekennzeichnet**, daß der Schieber (16) mit seiner Werkzeugaufnahme (14) durch ein stirnseitiges Langloch (34) des Grundkörpers (10) hindurchgreift und außerhalb des Langlochs (34) eine radial gegen den Schieber (16) abgedichtete, mit dem Schieber (16) mitbewegte Ringscheibe (38) trägt, die federnd gegen einen in einer stirnseitigen Ringnut (42) des Grundkörpers (10) angeordneten, vorzugsweise als Quadring (44) ausgebildeten elastomeren Dichtungsring so anpreßbar ist, daß zwischen Ringscheibe (38) und Grundkörper (10) ein über den Umfang der Ringscheibe (38) im wesentlichen konstanter Spalt vorzugsweise mit einer Weite von 5 bis 20 µm verbleibt.

10. Werkzeugkopf nach Anspruch 9, **dadurch gekennzeichnet**, daß die Wandstärke der Ringscheibe (38) durch Materialabtrag an ihrer dem Grundkörper (10) zugewandten Fläche unter Einstellung der vorgegebenen Spaltweite abstimmbar ist.

11. Werkzeugkopf nach Anspruch 9 oder 10, **dadurch gekennzeichnet**, daß die Ringscheibe (38) durch einen in einer schieberseitigen Umfangsnut angeordneten Federring (40) gegen den Dichtungsring (44) anpreßbar ist.

12. Werkzeugkopf nach einem der Ansprüche 1 bis 11, **dadurch gekennzeichnet**, daß der Grundkörper (10) eine radial durchgehende, endbegrenzungsfreie Führungsnut (30) für den Schieber (16) aufweist, und daß vorzugsweise auf der Seite des Gleitsteins (78) ein Abstandshalter zwischen dem Grundkörper (10) und einem Deckelteil (32) angeordnet ist.

## Claims

1. A tool head for use in machines tools, having a basic body (10), having a tool shank (24) which extends axially beyond the basic body (10) and can be coupled to a rotating machine spindle (26), having at least one slide (16) which can be adjusted transversely with respect to the basic body axis (12) and has a tool carrier (14) extending beyond the end face, having a measuring device (18) for directly measuring the adjusting path of the slide (16) in relation to the basic body (10), having measuring electronics arranged in the basic body (10) and connected to the measuring device (18), having a preferably electric adjusting motor (20) arranged in the basic body and acting in the adjusting direction on the slide (16), and having a power supply device (22) for the measuring electronics and, if appropriate, the adjusting motor (20), characterized in that the measuring device (18) has a plunger coil (86), fixed to the basic body, and a bar-shaped magnet armature (88), fixed to the slide and reaching through the plunger coil in the sliding direction of the slide (16).

2. The tool head as claimed in claim 1, wherein the plunger coil (86) is arranged in a coil housing which is fixed to the basic body and engages in a pocket-like recess (92) of the slide (16) and wherein the bar-shaped magnet armature (88), fixed to the slide, reaches through the pocket-like recess (92) and the plunger coil (86) in the sliding direction of the slide (16).

3. The tool head as claimed in claim 2, wherein the coil housing (90) has laterally overhanging assembly lugs (102) for fastening on the basic body (10).

4. The tool head as claimed in claim 2 or 3, wherein the coil housing (90) has a closed coil space (104).

5. The tool head as claims in one of claims 2 to 4, wherein the coil housing (90) has a recess (106) which is preferably arranged in the region between the two assembly lugs (102) is open in the direction of the adjusting motor (20) an partially embraces the motor housing (45) around its circumference.

6. The tool head as claimed in one of claims 1 to 5, wherein the magnet armature (88) is fastened by its one end, overhanging at the end face, on an adjusting holder (94) turned onto a threaded bore aligned in the sliding direction of the slide.

7. The tool head as claimed in claim 6, wherein the magnet armature (88) bears at its end opposite the adjusting holder (94) a guide pin (98), engaging in a linear guide (96) within the slide (16).

8. The tool head as claimed in claim 6 or 7, wherein the adjusting holder (94) can be fixed on the slide (16) by a lock screw (100) which is accessible form the outside in a predetermined sliding position of the slide (16).

9. The tool head as claimed in one of claims 1 to 8, wherein the slide (16) with its tool carrier (14) passes through a slot (34) on the end face of the basic body (10) and, outside the slot (34), bears a washer (38) which is sealed off radially with respect to the slide (16), is moved along with the slide (16) and can be pressed resiliently against an elastomeric sealing ring, which is arranged in an annular groove (42) on the end face of the basic body (10) and is preferably designed as a square ring (44), such that between the washer (38) and the basic body (10) there remains a gap which is substantially constant over the circumference of the washer (38) and preferably has a width of 5 to 20 µm.

10. The tool head as claimed in claim 9, wherein the wall thickness of the washer (38) can be adapted by material removal on its face facing the basic body (10), thereby setting the predetermined gap width.

11. The tool head as claimed in claim 9 or 10, wherein the washer (38) can be pressed against the sealing ring (44) by a spring ring (40) arranged in a circumferential groove on the slide.

12. The tool head as claimed in one of claims 1 to 11, wherein the basic body (10) has a radially continuous guide groove (30) for the slide (16) without any end limitations, and wherein there is preferably arranged on the side of the sliding block (78) a spacer between the basic body (10) and a cover part (32).

## Revendications

1. Tête d'outil à utiliser dans des machines-outils, avec un corps de base (10), une tige d'outil (24) dépassant axialement du corps de base (10) et pouvant être accouplée à une broche rotative (26), avec au moins un coulisseau (16) pouvant être déplacé transversalement à l'axe (12) du corps de base et présentant un porte-outil (14) dépassant du côté frontal, avec un dispositif de mesure (18) pour la mesure directe de la course de déplacement du coulisseau (16) par rapport au corps de base (10), avec un montage électronique de mesure disposé dans le corps de base (10) et relié au dispositif de mesure (18), avec un servomoteur (20), de préférence électrique, disposé dans le corps de base et agissant dans la direction de déplacement sur le coulisseau (16), et avec un dispositif d'alimentation en courant (22) pour le montage électronique de mesure et le cas échéant le servomoteur (20), **caractérisée** en ce que le dispositif de mesure (18) présente une bobine mobile (86) solidaire du corps de base, et un induit (88) en forme de barre, solidaire du coulisseau et traversant la bobine mobile dans la direction de déplacement du coulisseau (16).

2. Tête d'outil selon la revendication 1, **caractérisée** en ce que la bobine mobile (86) est disposée dans un boîtier de bobine solidaire du corps de base et s'engageant dans un évidement (92) du genre poche du coulisseau (16), et en ce que l'induit (88) en forme de barre et solidaire du coulisseau traverse l'évidement (92) du genre poche et la bobine mobile (86) dans la direction de déplacement du coulisseau (16).

3. Tête d'outil selon la revendication 2, **caractérisée** en ce que le boîtier de bobine (90) présente des pattes de montage (102) dépassant latéralement, pour la fixation au corps de base (10).

4. Tête d'outil selon la revendication 2 ou 3, **caractérisée** en ce que le boîtier de bobine (90) présente une chambre de bobine fermée (104).

5. Tête d'outil selon une des revendications 2 à 4, **caractérisée** en ce que le boîtier de bobine (90) présente un évidement (106), disposé de préférence dans la région comprise entre les deux pattes de montage (102), ouvert en direction du servomoteur (20) et entourant au moins partiellement le boîtier de moteur (45) sur sa périphérie.

6. Tête d'outil selon une des revendications 1 à 5, **caractérisée** en ce que l'induit (88) est, par une de ses extrémités, fixé, en dépassant du côté frontal, sur un support d'ajustement (94) vissé dans un perçage fileté orienté dans la direction de déplacement du coulisseau.

7. Tête d'outil selon la revendication 6, **caractérisée** en ce que l'induit (88) porte, à son extrémité opposée au support d'ajustement (94), un tenon de guidage (98) s'engageant dans un guide linéaire (96) à l'intérieur du coulisseau (16).

8. Tête d'outil selon la revendication 6 ou 7, **caractérisée** en ce que le support d'ajustement (94) peut être immobilisé sur le coulisseau (16) par une vis de blocage (100) accessible de l'extérieur dans une position prédéfinie de déplacement du coulisseau (16).

9. Tête d'outil selon une des revendications 1 à 8, **caracterisée** en ce que le coulisseau (16) traverse par son porte-outil (14) un trou oblong (34) sur le côté frontal du corps de base (10) et porte, à l'extérieur du trou oblong (34), une couronne (38) étanchée radialement vis-à-vis du coulisseau (16) et déplacée conjointement avec le coulisseau (16), couronne qui peut être pressée élastiquement, contre une bague d'étanchéité élastomère disposée dans une rainure annulaire (42) sur le côté frontal du corps de base (10) et réalisée de préférence sous forme de bague à section carrée (44), de telle sorte qu'un interstice essentiellement constant, de préférence d'une largeur de 5 à 20 µm, reste présent sur la périphérie de la couronne (38).

10. Tête d'outil selon la revendication 9, **caractérisée** en ce que l'épaisseur de paroi de la couronne (38) peut être ajustée, en réglant la largeur prédéfinie d'interstice, par enlévement de matière sur sa face tournée vers le corps de base (10).

11. Tête d'outil selon la revendication 9 ou 10, **caractérisée** en ce que la couronne (38) peut être pressée contre la bague d'étanchéité (44) par une rondelle-ressort (40) disposée dans une rainure périphérique côté coulisseau.

12. Tête d'outil selon une des revendications 1 à 11, **caractérisée** en ce que le corps de base (10) présente une rainure de guidage (30) pour le coulisseau (16) radialement débouchante et exempte de délimitation terminale, et en ce que, de préférence, un écarteur est disposé du côté du coulisseau (78) entre le corps de base (10) et une partie de couvercle (32).
